# EUROPÄISCHE PATENTSCHRIFT

(11) **EP 3 625 029 B1**
(45) Veröffentlichungstag und Bekanntmachung des Hinweises auf die Patenterteilung: **27.09.2023**
(21) Anmeldenummer: 18734545.9
(22) Anmeldetag: 26.06.2018
(51) Int. Cl.: B29C 64/153, B23K 26/02, B22F 3/105, B29C 64/112, B29C 64/393, B22F 12/90, B22F 12/45

(54) **MESSSYSTEM FÜR EINE VORRICHTUNG ZUM GENERATIVEN HERSTELLEN EINES DREIDIMENSIONALEN OBJEKTS**
MEASUREMENT SYSTEM FOR A DEVICE FOR GENERATIVELY PRODUCING A THREE-DIMENSIONAL OBJECT
SYSTÈME DE MESURE POUR UN DISPOSITIF DE FABRICATION ADDITIVE D'UN OBJET TRIDIMENSIONNEL

(30) Priorität: 28.06.2017 DE 102017210994
(43) Veröffentlichungstag der Anmeldung: 25.03.2020
(73) Patentinhaber: EOS GmbH Electro Optical Systems, 82152 Krailling (DE)
(72) Erfinder: MATTES, Thomas, 82205 Gilching (DE); PHILIPPI, Jochen, 82061 Neuried (DE)
(74) Vertreter: Prüfer & Partner mbB Patentanwälte · Rechtsanwälte
(86) Internationale Anmeldenummer: PCT/EP2018/067170
(87) Internationale Veröffentlichungsnummer: WO 2019/002325

(56) Entgegenhaltungen:
- WO-A1-03/097290
- WO-A1-2016/094827
- WO-A1-2017/079091
- US-A1- 2015 115 490
- US-B2- 7 847 212

## Beschreibung

Die vorliegende Erfindung bezieht sich auf eine Messsystem für eine Vorrichtung zum generativen Herstellen eines dreidimensionalen Objekts durch schichtweises Aufbringen und selektives Verfestigen eines Aufbaumaterials, vorzugsweise eines Pulvers.

Vorrichtungen und Verfahren dieser Art werden beispielsweise beim Rapid Prototyping, Rapid Tooling oder Additive Manufacturing verwendet. Ein Beispiel eines solchen Verfahrens ist unter dem Namen "Selektives Lasersintern oder Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von einem Querschnitt des herzustellenden Objekts entsprechenden Stellen mit einem Laserstrahl selektiv verfestigt.

Das selektive Bestrahlen der aufgebrachten Pulverschicht kann beispielsweise mittels eines Laserstrahls erfolgen, der durch eine Umlenkeinrichtung, die beispielsweise aus Galvanometerspiegeln gebildet ist, so abgelenkt wird, dass sein Auftreffpunkt auf die Pulveroberfläche über die zu verfestigten Stellen bewegt wird.

Alternativ offenbart WO 2015/091485 A1 eine Belichtungsvorrichtung, die eine Mehrzahl von Laserarrays enthält. Jedes dieser Laserarrays ist aus einer Mehrzahl einzelner VCSEL (vertical cavity surface-emitting laser) aufgebaut, die gemeinsam ein- oder ausgeschaltet werden. Die Laserarrays werden mittels eines optischen Elements auf die Pulveroberfläche abgebildet. Durch selektives Ein- bzw. Ausschalten der Laserarrays und eine Bewegung der Belichtungsvorrichtung parallel zu der Pulveroberfläche kann die gesamte Pulverschicht selektiv belichtet werden.

WO 2016/094827 A1 beschreibt ein Steuersystem vor das 3D-Drucken, bei dem eine Kamera zum Erfassen einer von der Pulverschicht reflektierten Strahlung von oben und ein Abstandssensor zum Bestimmen eines Abstands nach unten bis zu der Pulverschicht zum Einsatz kommen. Eine ähnliche Anordnung ist in WO 2017/079091 A1 beschrieben.

Um sicherzustellen, dass die Laserarrays mit ausreichender Genauigkeit und ausreichend gleichmäßiger Leistung auf die Pulveroberfläche abgebildet werden, muss diese Abbildung zum Zweck der Kalibrierung, Justierung und Qualitätssicherung mit entsprechender Genauigkeit messbar sein. Da eine solche Belichtungsvorrichtung aus vielen Hundert oder Tausend Einzellaserquellen aufgebaut sein kann und diese möglicherweise noch mit vielen unterschiedlichen Leistungswerten angesteuert werden sollen, kann daraus eine sehr hohe Anzahl benötigter Einzelmessungen resultieren. Ein geeignetes Messmittel muss daher so aufgebaut sein, dass die Messungen weitgehend automatisiert sowie ausreichend schnell und hochfrequent ablaufen können, um zu lange Messzeiten zu vermeiden.

Die Aufgabe der vorliegenden Erfindung besteht darin, ein Messmittel und ein Messverfahren für eine Vorrichtung zum generativen Herstellen eines dreidimensionalen Objekts durch schichtweises Aufbringen und selektives Verfestigen eines Aufbaumaterials bereitzustellen, mit denen aus einer Mehrzahl einzelner Laserarrays gebildete Belichtungsvorrichtungen schnell und automatisiert vermessen werden können.

Diese Aufgabe wird gelöst durch ein Messsystem gemäß Anspruch 1, eine das Messsystem enthaltende Vorrichtung gemäß Anspruch 4 und ein Verfahren zum Verwenden des Messsystems gemäß Anspruch 8 bzw. 13. Weiterbildungen der Erfindung sind jeweils in den Unteransprüchen angegeben. Dabei kann das Verfahren auch durch die untenstehenden bzw. in den Unteransprüchen ausgeführten Merkmale der Vorrichtungen weitergebildet sein oder umgekehrt, bzw. die Merkmale der Vorrichtungen können auch jeweils untereinander zur Weiterbildung genutzt werden.

Das erfindungsgemäße Messsystem dient zum Aus- oder Nachrüsten einer Vorrichtung zum Herstellen eines dreidimensionalen Objekts durch selektives schichtweises Verfestigen eines Aufbaumaterials. Die Vorrichtung enthält einen Belichter zum selektiven Belichten einer in einer Arbeitsebene der Vorrichtung aufgebrachten Schicht des Aufbaumaterials an Stellen, die einem Querschnitt des herzustellenden Objekts entsprechen, zum Verfestigen der belichteten Stellen. Der Belichter umfasst zumindest zwei Belichtungseinheiten, bevorzugt Laserarrays, und jede Belichtungseinheit ist auf ein Pixel in der Arbeitsebene abbildbar und zumindest ein- und ausschaltbar. Das Messsystem umfasst zumindest eine Kamera zum Ermitteln und Auswerten der von dem Belichter ausgesandten Strahlung und/oder der Position und/oder Orientierung der Belichtungseinheit/en absolut und/oder relativ zueinander, und zumindest einen Abstandssensor zum Erfassen einer Erstreckung senkrecht zu der Arbeitsebene. Durch die Kombination verschiedener Messmittel, insbesondere der Kamera und des Abstandssensors, können beispielsweise Messungen zur Kalibrierung der Vorrichtung schnell, einfach und automatisiert durchgeführt werden.

Vorzugsweise sind die zumindest eine Kamera (41) und der zumindest eine Abstandssensor (42) in einer einzigen Messvorrichtung integriert. Dadurch kann beispielsweise eine einfache Handhabung und eine leichte Anbringung des Messsystems in einer Herstellvorrichtung verwirklicht werden.

Erfindungsgemäß umfasst das Messsystem ferner zumindest eine Leistungsmesseinrichtung zum Ermitteln einer Strahlungsleistung des Belichters und/oder zumindest einer Belichtungseinheit. Dadurch kann beispielsweise bei den durch das Messsystem durchgeführten Messungen gleichzeitig auch die ausgesandte Strahlungsleistung überprüft werden.

Vorzugsweise umfasst das Messsystem zumindest einen Schalter, der ausgebildet ist, eine Kollision des Belichters und/oder eines in der Vorrichtung ferner enthaltenen Beschichters mit dem Messsystem zu vermeiden. Dadurch können beispielsweise Beschädigungen der Vorrichtung und/oder des Messsystems vermieden werden.

Vorzugsweise umfasst die Kamera einen CMOS-Sensor und/oder einen CCD-Sensor, und/oder die Leistungsmesseinrichtung umfasst eine Fotodiode und/oder einen Fotowiderstand, vorzugsweise integriert in eine Ulbricht-Kugel. Dadurch kann beispielsweise eine optische Vermessung und eventuell eine nachfolgende Bildverarbeitung durchgeführt werden.

Die erfindungsgemäße Vorrichtung dient dem Herstellen eines dreidimensionalen Objekts durch selektives schichtweises Verfestigen eines Aufbaumaterials. Die Vorrichtung enthält einen Belichter zum selektiven Verfestigen einer in einer Arbeitsebene der Vorrichtung aufgebrachten Schicht des Aufbaumaterials an Stellen, die einem Querschnitt des herzustellenden Objekts entsprechen, wobei der Belichter zumindest zwei Belichtungseinheiten, bevorzugt Laserarrays, umfasst und jede Belichtungseinheit auf ein Pixel in der Arbeitsebene abbildbar und zumindest ein- und ausschaltbar ist. Die Vorrichtung ist dazu ausgebildet und/oder gesteuert, die Schritte des Aufbringens und des selektiven Verfestigens zu wiederholen, bis das Objekt fertiggestellt ist. Ferner enthält die Vorrichtung ein erfindungsgemäßes Messsystem. Durch die Kombination der Vorrichtung mit dem erfindungsgemäßen Messsystem können beispielsweise Messungen zur Kalibrierung der Vorrichtung schnell, einfach und automatisiert durchgeführt werden.

Vorzugsweise sind die Belichtungseinheiten in Modulen angeordnet und/oder die Module in Kaskaden angeordnet und/oder die Belichtungseinheiten als Laserarrays gebildet, wobei die Laser des Laserarrays vorzugsweise VCSEL oder VECSEL sind. Dadurch kann beispielsweise ein Zeilenbelichter auf einfache Weise verwirklicht werden.

Vorzugsweise ist eine Haltevorrichtung in der Fahrtrichtung des Belichters und in einer Richtung senkrecht zur Arbeitsebene verfahrbar in der Vorrichtung angeordnet, und das Messsystem ist in einer Richtung senkrecht zu diesen beiden Richtungen bewegbar auf der Haltevorrichtung angeordnet. Dadurch kann beispielsweise eine einfache Positionierung des Messsystems innerhalb der Vorrichtung erfolgen.

Vorzugsweise ist das Messsystem und/oder die Haltevorrichtung aus der Vorrichtung heraus entnehmbar. Dadurch kann beispielsweise das Messsystem und/oder die Haltevorrichtung zum Herstellen eines Objekts der Vorrichtung entnommen werden und behindert das Herstellverfahren dadurch weniger.

Das erste erfindungsgemäße Verfahren besteht in der Verwendung eines erfindungsgemäßen Messsystems in einer erfindungsgemäßen Vorrichtung. Dabei werden ein Beschichter derVorrichtung und/oder der Belichter und/oder das Messsystem zueinander und/oder in Bezug auf eine Referenzebene der Vorrichtung ausgerichtet. Dadurch kann beispielsweise bei der Inbetriebnahme der Vorrichtung eine Kalibrierung bzw. Justierung der einzelnen Komponenten zueinander durchgeführt werden.

Vorzugsweise wird zumindest eine Referenzebene des Beschichters und/oder des Belichters und/oder des Messsystems und/oder der Vorrichtung ermittelt. Dabei ist vorzugsweise eine Referenzebene des Beschichters eine Beschichtungsebene und/oder eine Referenzebene des Belichters ist vorzugsweise eine mittlere Fokusebene der Belichtungseinheiten. Dadurch kann beispielsweise eine relative Lage der Referenzebenen zueinander ermittelt werden.

Vorzugsweise erfolgt eine Ausrichtung des Belichters und/oder ein Ermitteln der Fokusebene des Belichters anhand von ermittelten Schärfewerten einzelner Belichtungseinheiten in verschiedenen vertikalen Positionen und deren Lage in einer x/y-Ebene. Dadurch kann beispielsweise der Belichter auf die gewünschte Position und Orientierung eingestellt werden.

Vorzugsweise wird der Beschichter und/oder der Belichter anhand von absoluten z-Positionen und/oder Winkellagen um eine x- und/oder y-Richtung der zugeordneten Referenzebene(n) ausgerichtet. Dadurch kann beispielsweise eine exakte Ausrichtung von Beschichter und/oder Belichter anhand des Koordinatensystems der Vorrichtung erfolgen.

Vorzugsweise wird zuerst eine Grobausrichtung und dann eine Feinausrichtung des Beschichters und/oder des Belichters und/oder des Messsystems durchgeführt. Dadurch kann beispielsweise die Ausrichtung des Beschichters und/oder des Belichters genauer durchgeführt werden.

Das zweite erfindungsgemäße Verfahren besteht in der Verwendung eines erfindungsgemäßen Messsystems in einer erfindungsgemäßen Vorrichtung. Dabei werden, mithilfe der Leistungsmesseinrichtung, ausgefallene Laser oder Belichtungseinheiten und/oder Leistungsstufen einzelner Belichtungseinheiten ermittelt. Dadurch kann beispielsweise die Funktion des Belichters überprüft werden.

Vorzugsweise wird vor Einsatz des Messsystems ein bestimmungsgemäßer Betriebszustand der Vorrichtung hergestellt. Dadurch kann beispielsweise eine Kalibrierung bzw. Justierung in einem Zustand der Vorrichtung durchgeführt werden, der einem wirklichen Produktionszustand entspricht.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, auf die die vorliegende Erfindung anwendbar ist.
- Fig. 2a: ist eine schematische Ansicht eines in der in Fig. 1 gezeigten Vorrichtung enthaltenen Belichters von unten.
- Fig. 2b: ist eine schematische Ansicht eines in dem in Fig. 2a gezeigten Belichter enthaltenen Lasermoduls.
- Fig. 2c: ist eine schematische Ansicht eines in dem in Fig. 2b gezeigten Lasermodul enthaltenen Laserarrays.
- Fig. 3: ist eine schematische perspektivische Ansicht eines Abschnittes der in Fig. 1 gezeigten Vorrichtung mit einem Messsystem gemäß einem Ausführungsbeispiel der vorliegenden Erfindung.

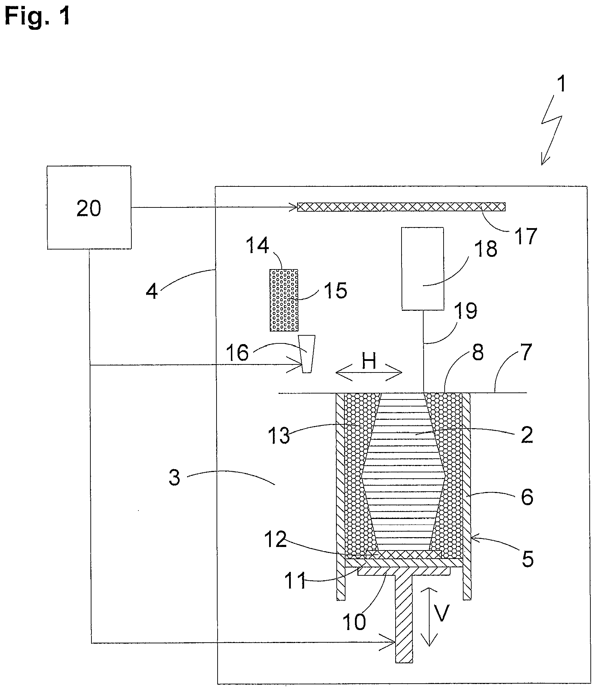

Im Folgenden wird mit Bezug auf Fig. 1 ein Ausführungsbeispiel einer Vorrichtung 1 beschrieben, auf die die vorliegende Erfindung anwendbar ist. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Behälterwandung 6 angeordnet. Durch die obere Öffnung des Behälters 5 ist eine Arbeitsebene 7 definiert, wobei der innerhalb der Öffnung liegende Bereich der Arbeitsebene 7, der zum Aufbau des Objekts 2 verwendet werden kann, als Baufeld 8 bezeichnet wird.

In dem Behälter 5 ist ein in einer vertikalen Richtung V bewegbarer Träger 10 angeordnet, an dem eine Grundplatte 11 angebracht ist, die den Behälter 5 nach unten abschließt und damit dessen Boden bildet. Die Grundplatte 11 kann eine getrennt von dem Träger 10 gebildete Platte sein, die an dem Träger 10 befestigt ist, oder sie kann integral mit dem Träger 10 gebildet sein. Je nach verwendetem Pulver und Prozess kann auf der Grundplatte 11 noch eine Bauplattform 12 als Bauunterlage angebracht sein, auf der das Objekt 2 aufgebaut wird. Das Objekt 2 kann aber auch auf der Grundplatte 11 selber aufgebaut werden, die dann als Bauunterlage dient. In Fig. 1 ist das in dem Behälter 5 auf der Bauplattform 12 zu bildende Objekt 2 unterhalb der Arbeitsebene 7 in einem Zwischenzustand dargestellt mit mehreren verfestigten Schichten, umgeben von unverfestigt gebliebenem Aufbaumaterial 13.

Die Lasersintervorrichtung 1 enthält weiter einen Vorratsbehälter 14 für ein durch elektromagnetische Strahlung verfestigbares pulverförmiges Aufbaumaterial 15 und einen in einer horizontalen Richtung H bewegbaren Beschichter 16 zum Aufbringen des Aufbaumaterials 15 innerhalb des Baufelds 8. Vorzugsweise erstreckt sich der Beschichter 16 quer zu seiner Bewegungsrichtung über den ganzen zu beschichtenden Bereich.

Optional ist in der Prozesskammer 3 eine Strahlungsheizung 17 angeordnet, die zum Beheizen des aufgebrachten Aufbaumaterials 15 dient. Als Strahlungsheizung 17 kann beispielsweise ein Infrarotstrahler vorgesehen sein.

Die Lasersintervorrichtung 1 enthält ferner einen ebenfalls in einer horizontalen Richtung H bewegbaren Belichter 18, der eine Laserstrahlung 19 erzeugt, die auf die Arbeitsebene 7 fokussiert wird. Der Belichter 15 ist vorzugsweise als Zeilenbelichter ausgebildet, der in der Lage ist, eine sich quer zu seiner Bewegungsrichtung erstreckende Linie zu belichten, die sich über den gesamten zu belichtenden Bereich erstreckt.

Weiter enthält die Lasersintervorrichtung 1 eine Steuereinheit 20, über die die einzelnen Bestandteile der Vorrichtung 1 in koordinierter Weise zum Durchführen des Bauprozesses gesteuert werden. Alternativ kann die Steuereinheit auch teilweise oder ganz außerhalb der Vorrichtung angebracht sein. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

Im Betrieb wird zum Aufbringen einer Pulverschicht zunächst der Träger 10 um eine Höhe abgesenkt, die der gewünschten Schichtdicke entspricht. Der Beschichter 16 fährt zunächst zu dem Vorratsbehälter 14 und nimmt aus ihm eine zum Aufbringen einer Schicht ausreichende Menge des Aufbaumaterials 15 auf. Dann fährt er über das Baufeld 8 und bringt dort eine dünne Schicht des pulverförmigen Aufbaumaterials 15 auf die Bauunterlage oder eine bereits vorher vorhandene Pulverschicht auf. Das Aufbringen erfolgt zumindest über den gesamten Querschnitt des herzustellenden Objekts 2, vorzugsweise über das gesamte Baufeld 8, also den durch die Behälterwandung 6 begrenzten Bereich. Optional wird das pulverförmige Aufbaumaterial 15 mittels der Strahlungsheizung 17 auf eine Arbeitstemperatur aufgeheizt.

Anschließend verfährt der Belichter 18 über die aufgebrachte und vorgeheizte Pulverschicht und verfestigt das pulverförmige Aufbaumaterial 15 an den Stellen, die dem Querschnitt des herzustellenden Objekts 2 entsprechen, indem er selektiv diese Stellen mit der Laserstrahlung 19 belichtet. Dabei werden die Pulverkörner an diesen Stellen durch die durch die Strahlung eingebrachte Energie teilweise oder vollständig aufgeschmolzen, so dass sie nach einer Abkühlung miteinander verbunden als Festkörper vorliegen. Diese Schritte werden solange wiederholt, bis das Objekt 2 fertiggestellt ist und der Prozesskammer 3 entnommen werden kann.

Die Belichtung der zu verfestigenden Stellen erfolgt vorzugsweise so, dass der Belichter in einer Fahrtrichtung über das Baufeld verfährt und alle zu verfestigenden Stellen der Pulverschicht, die jeweils unterhalb der momentanen Position des Beschichters liegen, gleichzeitig belichtet. Dafür muss der Belichter dazu ausgerüstet sein, in der Richtung quer zur Belichtungsrichtung unterschiedliche Belichtungsprofile erzeugen zu können. Das ist in der vorliegenden Ausführungform durch eine Mehrzahl unabhängig voneinander ansteuerbarer Belichtungseinheiten verwirklicht.

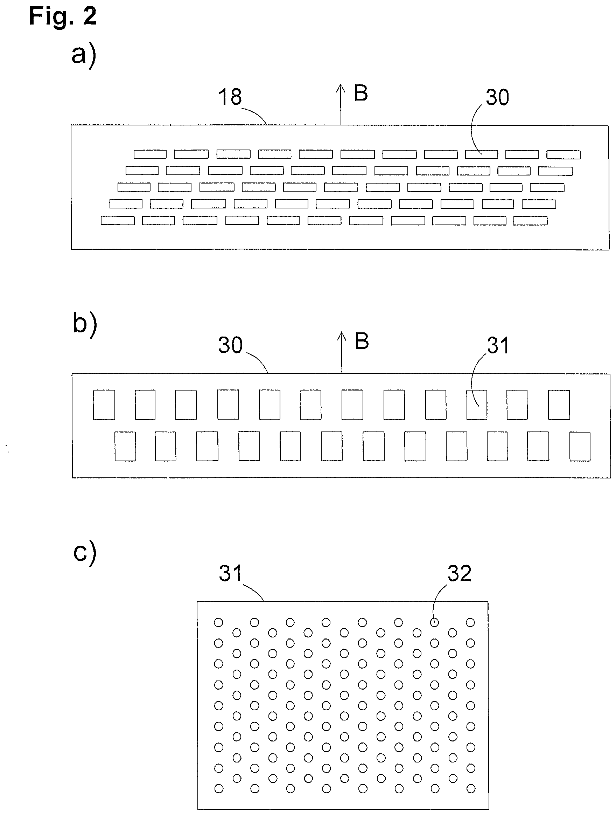

Fig. 2 zeigt schematisch eine Ansicht des Belichters 18 von unten. Die Bewegungsrichtung des Belichters über das Baufeld ist dabei durch einen Pfeil B angegeben. Dabei zeigt Fig. 2a, wie auf der Unterseite des Belichters 18 eine Mehrzahl von Lasermodulen 30 in gegeneinander versetzten Reihen angeordnet ist. Fig. 2b zeigt, wie jedes Lasermodul 30 aus einer Mehrzahl von Laserarrays 31 gebildet ist. Fig. 2c zeigt, wie jedes Laserarray 31 aus einer Mehrzahl einzelner Laser 32 gebildet ist.

Die einzelnen Laser 32 sind als Halbleiter-Diodenlaser vom Typ VCSEL (vertical cavity surface-emitting laser) oder VECSEL (Vertical External Cavity Surface Emitting Laser) ausgebildet. Diese Laserquellen haben eine Abstrahlrichtung senkrecht zur Haupterstreckung (Waferebene) und eine kreissymmetrische Strahldivergenz und sind besonders gut zur Anordnung in zweidimensionalen Arrays geeignet. Bei dem in Fig. 2c gezeigten Laserarray 31 sind die einzelnen Laser 32 hexagonal angeordnet, aber beliebige andere Anordnungen sind möglich. Alle Laser 32 eines Laserarrays 31 werden bevorzugt gleichzeitig angesteuert. Die kleinste einzeln ansteuerbare Belichtungseinheit des Belichters 18 ist dann das Laserarray 31. Das hat den Vorteil, dass bei Ausfall eines einzelnen Lasers nicht gleich eine vollständige Belichtungseinheit ausfällt, sondern der Leistungsabfall von den anderen Lasern des Laserarrays ausgeglichen werden kann.

Mehrere Laserarrays 31 sind zu einem Lasermodul 30 zusammengefasst. Für jedes Lasermodul 30 ist ferner ein (in der Figur nicht gezeigtes) optisches Element bereitgestellt, mit dem die Laserarrays 31 auf die Arbeitsebene 7 abgebildet werden. Jedes Laserarray 31 wird dabei auf einen Bildpunkt (Pixel) in der Arbeitsebene 7 abgebildet. Jedes Lasermodul 30 wird auf einen bestimmten Bereich in der Arbeitsebene 7 gerichtet. Wenn der Belichter in seiner Bewegungsrichtung B bewegt wird, bilden die Bildpunkte der eingeschalteten Laserarrays 31 eine Spur.

Bei dem in Fig. 2b gezeigten Lasermodul 30 sind die einzelnen Laserarrays 31 in zwei versetzten Reihen so angeordnet, dass die Spuren ihrer Bildpunkte in der Arbeitsebene bei einer Bewegung des Lasermoduls 30 in der Bewegungsrichtung B aneinandergrenzen. Wenn beispielsweise die Laserarrays 31 quer zur Bewegungsrichtung eine Breite von 0,1 mm haben und die das optische Bauelement einen verkleinernden Abbildungsmaßstab von 1:5, haben die aneinandergrenzenden Spuren der Laserarrays 31 eine Breite von 0,02 mm. Anders ausgedrückt hat der Belichter 18 in einer Richtung quer zu seiner Bewegungsrichtung B eine Auflösung von 0,02 mm.

Um die gesamte Breite des Belichters 18 auszunutzen, sind mehrere Lasermodule 30 in der Richtung quer zur Bewegungsrichtung B in einer Reihe angeordnet. Wegen der optischen Verkleinerung der Lasermodule 30 durch das optische Element ist die Summe der Breite einer bei einer Bewegung eines Lasermoduls 30 in der Bewegungsrichtung B aus den Bildpunkten aller Laserarrays 31 des Lasermoduls 30 gebildeten Spur um den Verkleinerungsmaßstab schmaler als das Lasermodul 30 selber. Das Rastermaß der Spuren aller Lasermodule in einer Reihe, also der Mittenabstand der Spuren zueinander, entspricht aber dem (unverkleinerten) Rastermaß der Lasermodule 30. Somit verbleibt zwischen den durch eine einzelne Reihe von Lasermodulen 30 belichtbaren Spuren ein nicht belichtbarer Bereich.

Um eine kontinuierliche Belichtung der Arbeitsebene in der Richtung quer zur Bewegungsrichtung B zu ermöglichen, sind daher mehrere Reihen von Lasermodulen 30 versetzt zueinander angeordnet. Anders ausgedrückt werden einzelne Kaskaden aus Lasermodulen 30 gebildet, die in der Fahrtrichtung F hintereinander liegen, aber in der Richtung quer zur Fahrtrichtung gegeneinander versetzt sind. In Fig. 2a bilden beispielsweise die am weitesten links gelegenen Lasermodule 30 der fünf Reihen eine Kaskade. Mehrere solcher Kaskaden sind dann in der Richtung quer zur Fahrtrichtung nebeneinander angeordnet. Innerhalb jeder Kaskade sind die Lasermodule 30 so weit versetzt zueinander angeordnet, dass die Spuren der Bildpunkte ihrer Laserarrays 31 aneinandergrenzen.

In einer beispielhaften Ausführungsform enthält der Belichter 108 Lasermodule, jedes Lasermodul enthält 32 Laserarrays, und jedes Laserarray enthält 282 VCSEL. Daraus ergeben sich 3456 einzeln ansteuerbare Belichtungseinheiten (Laserarrays). Wenn diese beispielsweise in 61 Leistungsstufen (von 0=aus bis 60=Maximalleistung) ansteuerbar sein sollen, sind zu einer vollständigen Kalibrierung bzw. Justierung über 200.000 Messungen erforderlich.

Solche Messungen können beispielsweise erforderlich sein im Rahmen von produktionsbegleitender Kalibrierung/Justierung, produktionsbegleitender Qualitätssicherung oder periodischer Qualitätssicherung durch Kunden oder Servicepersonal. Die Messungen müssen dabei automatisiert genau und schnell erfolgen, damit eine Vermessung eines Belichters mit akzeptablen Durchlaufzeiten und akzeptablem Aufwand durchführbar ist.

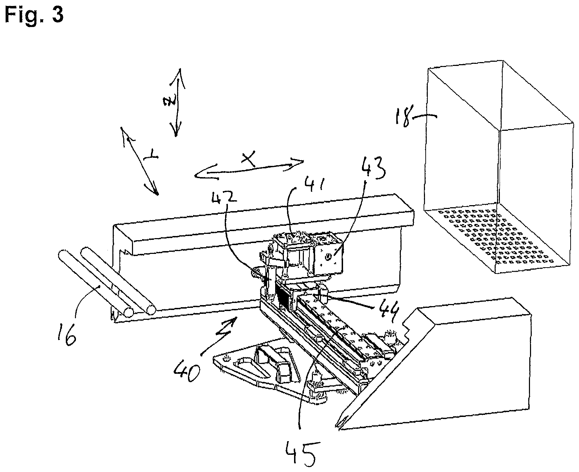

Fig. 3 zeigt vereinfacht eine perspektivische Ansicht einer Messeinrichtung 40, die zum Aus- oder Nachrüsten der Lasersintervorrichtung 1 geeignet ist. Teile der Lasersintervorrichtung 1, die zum Beschreiben der Messeinrichtung 40 und deren Verwendung nicht erforderlich sind, sind der Übersichtlichkeit halber weggelassen.

Wie in Fig. 3 gezeigt ist ein dreidimensionales Koordinatensystem der Vorrichtung folgendermaßen definiert:
- Die x-Richtung ist die Richtung in der Arbeitsebene, in der der Beschichter 16 und der Belichter 18 über die Arbeitsebene 7 der Vorrichtung 1 verfahren.
- Die y-Richtung ist die Richtung in der Arbeitsebene 7, die senkrecht zu der x-Richtung verläuft. In dieser Richtung erstrecken sich die Längsrichtungen von Beschichter 16 und Belichter 18.
- Die z-Richtung ist die Höhenrichtung, in der der Träger 10 bewegt wird. Eine Bewegung in dieser Richtung verändert den vertikalen Abstand zum Beschichter oder Belichter.

Die Messeinrichtung 40 umfasst eine Kamera 41, einen Abstandssensor 42 und eine Leistungsmesseinrichtung 43. Diese drei Komponenten der Messeinrichtung 40 sind in fester Lagebeziehung zueinander auf einer Messkopfhalterung 44 angebracht. Vorzugsweise sind die drei Komponenten in x-Richtung nebeneinander angeordnet mit minimaler Ausdehnung in y-Richtung.

Die Messkopfhalterung 44 ist in y-Richtung verfahrbar auf einer y-Positioniereinheit 45 angebracht. Diese ist an einer (nicht gezeigten) Haltevorrichtung angebracht, die in x-Richtung und in z-Richtung bewegbar in der Vorrichtung 1 angeordnet sind. Da die Vorrichtung 1 bereits Antriebe für die Bewegung des Beschichters 16 und des Belichters 18 in x-Richtung und für die Bewegung des Trägers 10 in z-Richtung enthält, sind dazu keine gesonderten Antriebe erforderlich.

Die Haltevorrichtung ist aus der Vorrichtung 1 heraus entnehmbar in der Vorrichtung 1 angebracht. Vorzugsweise ist auch die Messkopfhalterung 44 aus der Vorrichtung 1 heraus entnehmbar auf der y-Positioniereinheit 45 angebracht. Die Haltevorrichtung kann beispielsweise mit Magneten auf dem Träger 10 angebracht sein.

Die Messeinrichtung 40 wird mit an sich bekannten Elementen und Verfahren, beispielsweise einer Nivellierung gegenüber der Arbeitsebene mittels dreier Einstellschrauben, auf das Koordinatensystem der Maschine ausgerichtet. Für alle drei Richtungen ist ein Wegmesssystem bereitgestellt, so dass die Position der Messeinrichtung ermittelt und reproduzierbar eingestellt werden kann.

Die Kamera 41 dient zur Aufnahme eines optischen Bildes des Belichters 18 von unten, insbesondere der Laserarrays 31 und Lasermodule 30 im lichtaussendenden Zustand. Dazu kann ein Objektiv der Kamera 41 so eingestellt sein, dass beispielsweise das zu beobachtende Laserarray 31 direkt auf den Bildaufnahmechip der Kamera abgebildet wird. Es kann aber auch in der Ebene, in die das optische Element eines Lasermoduls 30 das Laserarray 31 abbildet, eine Mattglasscheibe eingesetzt werden und das darauf entstehende Bild von dem Objektiv der Kamera auf den Bildaufnahmechip abgebildet werden, oder dieses reelle Bild kann ohne Zwischenschaltung einer Mattglasscheibe auf den Bildaufnahmechip abgebildet werden.

Als Bildaufnahmechip wird beispielsweise ein CCD-Sensor oder ein CMOS-Sensor verwendet. Dieser wandelt das empfangene Bild in elektrische Signale um, die dann beispielsweise digitalisiert, gespeichert und weiterverarbeitet werden können.

Die Kamera kann ferner Halterungen für Filter enthalten, beispielsweise zum Abschwächen der Laserleistung auf einen für den Bildaufnahmechip geeigneten Wert.

Der Abstandssensor 42 dient dazu, den vertikalen Abstand (in z-Richtung, also senkrecht zur Arbeitsebene) zu einem oberhalb des Sensors befindlichen Element zu ermitteln. Das Messprinzip des Abstandssensors kann mechanisch mittels eines Tasters oder berührungslos ausgebildet sein, beispielsweise induktiv, kapazitiv oder optisch.

Typischerweise hat der Abstandssensor einen Messbereich von einigen mm. Die Auflösung liegt vorzugsweise im pm-Bereich, idealerweise 1 µm oder besser.

Die Leistungsmesseinrichtung 43 dient zum Ermitteln einer Strahlungsleistung, die von einem oder mehreren Laserarrays 31 abgegeben werden. Zu diesem Zweck enthält sie einen Sensor, der in der Lage ist, eine optische Leistung in ein elektrisches Signal umzuwandeln, das dann beispielsweise digitalisiert, gespeichert und weiterverarbeitet werden kann. Dazu enthält die Leistungsmesseinrichtung 43 einen fotoelektrischen Sensor, beispielsweise einen Fotowiderstand, eine Fotodiode, oder einen OLPC-Sensor (Online Laser Power Control). Dieser Sensor ist vorzugsweise in eine Ulbricht-Kugel integriert, die zum Sammeln der von dem Laserarrays 31 ausgesandten Strahlung dient.

Optional sind weitere Elemente bereitgestellt, beispielsweise Endschalter, die vorzugsweise berührungslos arbeiten und eine Kollision der Messeinrichtung 40 mit dem Beschichter 16, dem Belichter 18 oder weiteren Komponenten der Vorrichtung 1 zu vermeiden.

Im folgenden werden Verfahren zur Vermessung, Kalibrierung und Justierung der Vorrichtung 1 beschrieben, bei denen die Messeinrichtung 40 zur Verwendung kommt.

Nach der Montage der der Vorrichtung 1 ist die relative Position von Beschichter 16 und Belichter 18 aufgrund langer mechanischer Toleranzketten nur unzureichend genau bestimmt und bekannt. Daher ist es vor Inbetriebnahme erforderlich, sie zueinander und zu der Vorrichtung 1 auszurichten.

Vorzugsweise werden dazu Referenzebenen der Vorrichtung 1, des Beschichters 16 und/oder des Belichters 18 ermittelt und miteinander in Deckung gebracht oder zumindest parallel zueinander ausgerichtet. Als Referenzebene der Vorrichtung 1 wird beispielsweise die x/y-Ebene bei konstanter z-Position oder die Oberkante des Behälters 5 verwendet. Als Referenzebene des Beschichters 16 wird beispielsweise eine Beschichtungsebene verwendet, die durch den Verlauf einer Unterkante eines Beschichtungselements des Beschichters 16, beispielsweise einer Klinge oder einer Walze, in der y-Richtung und deren Verfahren in x-Richtung bestimmt ist. Als Referenzebene des Belichters 18 wird beispielsweise eine untere Oberfläche eines den Belichter nach unten abschließenden Belichterfensters oder eine mittlere Fokusebene der einzelnen Laserarrays 31 verwendet. Die mittlere Fokusebene wird berücksichtigt, weil die Fokusebenen der einzelnen Laserarrays 31 toleranzbedingt leicht voneinander abweichen können.

Da die Messeinrichtung 40 immer nur relative Lagen der Referenzebenen zueinander ermitteln kann, muss im Voraus eine Ebene mechanisch justiert werden. Das kann beispielsweise die Bewegungsebene der Messeinrichtung 40 selber sein oder auch die Referenzebene des Beschichters 16. Das erfolgt beispielsweise durch Ausrichtung des Beschichters mittels Fühlerlehren parallel zu der Oberkante des Behälters 5.

Die Ausrichtung der Referenzebenen zueinander erfolgt anhand von absoluten z-Positionen und/oder Winkellagen um eine x- und/oder y-Richtung der einzelnen Referenzebenen.

Die relative Lage zwischen den Referenzebenen der Messeinrichtung 40 und des Beschichters 16 wird dadurch ermittelt, dass die Unterkante des Beschichtungselements (oder der Beschichtungslemente, in Fig. 3 sind zwei Beschichterwalzen gezeigt) an zwei in y-Richtung möglichst weit auseinander liegenden Positionen mithilfe des Abstandssensors 42 vermessen werden. Aus diesen Messwerten kann ein Verkippen der beiden Ebenen zueinander um die x-Achse ermittelt und gegebenenfalls korrigiert werden. Ein Verkippen um die y-Achse kann ermittelt und gegebenenfalls korrigiert werden, wenn der Beschichter 16 und die Messeinrichtung 40 hinreichend in x-Richtung verfahren werden und die Messung wiederholt wird. Wenn der Beschichter 16 und die Messeinrichtung 40 jedoch mittels desselben Antriebs in x-Richtung verfahren werden, verlaufen sie automatisch parallel und so eine Messung ist nicht erforderlich.

Das Einstellen des Belichters 18 erfolgt vorzugsweise in zwei Schritten. Zur Grobausrichtung werden mittels des Abstandssensors zumindest drei möglichst weit auseinander liegenden Positionen des Belichterfensters mithilfe des Abstandssensors 42 vermessen. Aus diesen Messwerten kann ein Verkippen der Ebene des Belichterfensters ermittelt und gegebenenfalls korrigiert werden.

Zur Feinausrichtung wird dann die mittlere Fokusebene des Belichters 18 als Referenzebene herangezogen. Diese mittlere Fokusebene wird anhand von ermittelten Schärfewerten der Abbildung einzelner Belichtungseinheiten in verschiedenen senkrecht zur vertikalen z-Achse liegenden Bildebenen und deren Lage in einer x/y-Ebene ermittelt. Dazu verfährt die Messeinrichtung 40 in x- und y-Richtung zu verschiedenen Positionen unterhalb des Belichters 18. Ein (oder mehrere) Laserarrays 31 wird oder werden eingeschaltet, deren Abbildung mit der Kamera 41 ausgewertet und durch Verfahren der Messeinrichtung 40 in z-Richtung über das Wegmesssystem der z-Achse die Position maximaler Schärfe ermittelt. Aus den Differenzen der z-Positionen kann eine Verkippung der mittleren Fokusebene ermittelt und gegebenenfalls korrigiert werden. Dasselbe kann für verschiedene Positionen des Belichters 18 in der y-Richtung durchgeführt werden.

Durch Verfahren des Messeinrichtung 40 in x- und y-Richtung unter zu vermessende Laserarrays 31 und Bestimmen der Lage des Bildes des Laserarrays 31 auf dem Bildaufnahmesensor der Kamera können auch Abweichungen der Lage der Laserarrays 31 erkannt und korrigiert werden. Solche Abweichungen ergeben sich beispielsweise, wenn der Belichter 18 um die z-Achse verdreht ist.

Außer der Position und der Fokusebene jedes Laserarrays 31 kann aus dem Bild des Laserarrays 31 auch der Ausfall einzelner Laser 32 ermittelt werden.

Weiter kann die Messeinrichtung 40 auch die Leistungsabgabe der einzelnen Laserarrays 31 ermitteln. Dazu wird die Leistungsmesseinrichtung unter das zu vermessende Laserarray 31 gebracht und das Laserarray 31 mittels eines pulsweitenmodulierten Signals (PWM-Signals) in unterschiedlichen Leitungsstufen angesteuert vom Auszustand (PWM-Signal kontinuierlich aus) bis zum Dauerbetrieb (PWM-Signal kontinuierlich ein). Aus den Messergebnissen kann die Abhängigkeit der abgestrahlten Lichtintensität von der PWM-Ansteuerung erkannt und gegebenenfalls korrigiert werden. Abweichungen ergeben sich beispielsweise aus unterschiedlichem Wirkungsgrad einzelner Laserarray, aus Nichtlinearitäten oder durch den Ausfall einzelner Laser eines Moduls. Im Extremfall kann auch ein Laserarray ganz ausgefallen sein, was dann durch die Messeinrichtung erfasst wird.

Eine solche Vermessung der einzelnen Laserarrays 31 ist nicht nur bei der Inbetriebnahme von Nutzen, sondern kann auch während der Betriebsdauer der Vorrichtung 1 immer wieder durchgeführt werden, vorzugsweise in vorbestimmten Zeitintervallen oder abhängig von der Benutzung der Vorrichtung.

Vor dem Einsatz der Messeinrichtung 40 kann ein bestimmungsgemäßer Betriebszustand der Vorrichtung hergestellt werden, der beispielsweise dem Belichtungsfall beim Herstellen eines dreidimensionalen Objekts entspricht.

Anstelle einer Bewegung des Belichters in einer Fahrtrichtung und einer Erstreckung des Belichters in der Querrichtung zu der Fahrtrichtung über die gesamte zu belichtende Breite des Baufelds kann auch ein Belichter mit kleineren Abmaßen verwendet werden, der zweidimensional über das Baufeld geführt wird. Dann kann mit der beschriebenen Messvorrichtung auch eine Positionierungsgenauigkeit des Belichters in y-Richtung ermittelt und gegebenenfalls korrigiert werden.

Dadurch, dass die Kamera 41, der Abstandssensor 42 und die Leistungsmesseinrichtung 43 mit fester Lagebeziehung zueinander in der Vorrichtung angebracht sind, ist es möglich, kombinierte Messungen von zweien dieser Messmittel oder aller dreier Messmittel durchzuführen. Komplexe Ausrichtungen der Messmittel während des Messvorgangs entfallen, und die Messergebnisse der drei Messmittel lassen sich genau und reproduzierbar in Beziehung zueinander setzen. Dadurch kann eine schnelle, hoch automatisierte und kundenfreundliche Vermessung aller relevanten Leistungsdaten des Belichters auf einfache Weise durchgeführt und für Kalibrierungs- Justage- Dokumentations- und Wartungszwecke verwendet werden.

Die Messeinrichtung 40 kann als Messsystem mit getrennt voneinander bereitgestellten Komponenten verwirklicht sein, die Komponenten können aber auch in einer einzigen Messvorrichtung integriert sein.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum generativen Herstellen eines dreidimensionalen Objektes durch schichtweises Aufbringen und selektives Verfestigen eines Aufbaumaterials angewendet werden, bei dem die zum Verfestigen des Aufbaumaterials erforderliche Energie in Form von Strahlung in das Aufbaumaterial eingebracht wird. Allgemein kann als Belichter jede Einrichtung verwendet werden, mit der Energie als Wellen- oder Teilchenstrahlung selektiv auf eine Schicht des Aufbaumaterials aufgebracht werden kann.

Als Aufbaumaterial können verschiedene Materialien verwendet werden, vorzugsweise Pulver, insbesondere Metallpulver, Kunststoffpulver, Keramikpulver, Sand, gefüllte oder gemischte Pulver.

## Patentansprüche

1. Messsystem (40) zum Aus- oder Nachrüsten einer Vorrichtung (1) zum Herstellen eines dreidimensionalen Objekts (2) durch selektives schichtweises Verfestigen eines Aufbaumaterials (15), wobei
die Vorrichtung (1) einen Belichter (18) enthält zum selektiven Belichten einer in einer Arbeitsebene (7) der Vorrichtung (1) aufgebrachten Schicht des Aufbaumaterials (15) an Stellen, die einem Querschnitt des herzustellenden Objekts (2) entsprechen, zum Verfestigen der belichteten Stellen,
der Belichter (18) zumindest zwei Belichtungseinheiten (31), bevorzugt Laserarrays, umfasst und jede Belichtungseinheit (31) auf ein Pixel in der Arbeitsebene (7) abbildbar und zumindest ein- und ausschaltbar ist,
das Messsystem (40) umfasst:
- zumindest eine Kamera (41) zum Ermitteln und Auswerten der von dem Belichter (18) ausgesandten Strahlung (19) und/oder der Position und/oder Orientierung der Belichtungseinheit(en) (31) absolut und/oder relativ zueinander,
- zumindest einen Abstandssensor (42) zum Erfassen einer Erstreckung in einer Richtung (z) senkrecht zu der Arbeitsebene (7),
- eine Leistungsmesseinrichtung (43) zum Ermitteln einer Strahlungsleistung des Belichters (18) und/oder zumindest einer der Belichtungseinheiten (31), und
- eine Messkopfhalterung (44),
wobei das Messsystem (40) dazu ausgebildet ist, dass die Kamera (41), der Abstandssensor (42) und die Leistungsmesseinrichtung (43) in fester Lagebeziehung zueinander auf der Messkopfhalterung (44) angebracht und so in die Vorrichtung (1) eingebaut werden, dass die Kamera (41) ein optisches Bild des Belichters (18) von unten aufnehmen kann und dass der Abstandssensor (42) den vertikalen Abstand in z-Richtung zu einem oberhalb des Sensors befindlichen Element ermitteln kann,
wobei die zumindest eine Kamera (41) und der zumindest eine Abstandssensor (42) vorzugsweise in einer einzigen Messvorrichtung integriert sind.

2. Messsystem nach Anspruch 1, das zumindest einen Schalter umfasst, der ausgebildet ist, eine Kollision des Belichters (18) und/oder eines in der Vorrichtung (1) ferner enthaltenen Beschichters (16) mit dem Messsystem (40) zu vermeiden.

3. Messsystem (40) nach einem der Ansprüche 1 oder 2, wobei
die Kamera (41) einen CMOS-Sensor und/oder einen CCD-Sensor umfasst und/oder
die Leistungsmesseinrichtung (42) eine Fotodiode und/oder einen Fotowiderstand, vorzugsweise integriert in eine Ulbricht-Kugel, umfasst.

4. Vorrichtung (1) zum Herstellen eines dreidimensionalen Objekts (2) durch selektives schichtweises Verfestigen eines Aufbaumaterials (15), wobei die Vorrichtung (1) enthält:
einen Belichter (18) zum selektiven Verfestigen einer in einer Arbeitsebene (7) der Vorrichtung (1) aufgebrachten Schicht des Aufbaumaterials (15) an Stellen, die einem Querschnitt des herzustellenden Objekts (2) entsprechen, wobei der Belichter (18) zumindest zwei Belichtungseinheiten (31), bevorzugt Laserarrays, umfasst und jede Belichtungseinheit (31) auf ein Pixel in der Arbeitsebene (7) abbildbar und zumindest ein- und ausschaltbar ist,
wobei die Vorrichtung (1) dazu ausgebildet und/oder gesteuert ist, die Schritte des Aufbringens und des selektiven Verfestigens zu wiederholen, bis das Objekt (2) fertiggestellt ist,
und wobei die Vorrichtung (1) weiter ein Messsystem (40) gemäß einem der Ansprüche 1 bis 3 enthält, das so in die Vorrichtung (1) eingebaut ist, dass die Kamera (41), der Abstandssensor (42) und die Leistungsmesseinrichtung (43) in fester Lagebeziehung zueinander auf der Messkopfhalterung (44) angebracht sind, dass die Kamera (41) eine optisches Bild des Belichters (18) von unten aufnehmen kann und dass der Abstandssensor den vertikalen Abstand in z-Richtung zu einem oberhalb des Sensors befindlichen Element ermitteln kann.

5. Vorrichtung (1) nach Anspruch 4, wobei
die Belichtungseinheiten (31) in Modulen (30) angeordnet sind und/oder
die Module (30) in Kaskaden angeordnet sind und/oder
die Belichtungseinheiten (31) als Laserarrays gebildet sind, wobei die Laser des Laserarrays vorzugsweise VCSEL oder VECSEL sind.

6. Vorrichtung (1) nach einem der Ansprüche 4 oder 5, wobei
eine Haltevorrichtung in der Fahrtrichtung (F, y) des Belichters (18) und in einer Richtung (z) senkrecht zur Arbeitsebene (7) verfahrbar in der Vorrichtung (1) angeordnet ist und
wobei das Messsystem (40) in einer Richtung (y) senkrecht zu diesen beiden Richtungen (x, z) bewegbar auf der Haltevorrichtung angeordnet ist.

7. Vorrichtung (1) nach einem der Ansprüche 4 bis 6, wobei das Messsystem (40) und/oder die Haltevorrichtung aus der Vorrichtung (1) heraus entnehmbar ist.

8. Verfahren zur Verwendung eines Messsystems (40) gemäß einem der Ansprüche 1 bis 3 in einer Vorrichtung (1) gemäß einem der Ansprüche 4 bis 7, wobei
das Messsystem (40) so in die Vorrichtung (1) eingebaut ist, dass die Kamera (41) eine optisches Bild des Belichters (18) von unten aufnehmen kann und dass der Abstandssensor den vertikalen Abstand in z-Richtung zu einem oberhalb des Sensors befindlichen Element ermitteln kann und
ein Beschichter (16) der Vorrichtung und/oder der Belichter (18) und/oder das Messsystem (40) zueinander und/oder in Bezug auf eine Referenzebene der Vorrichtung (1) ausgerichtet werden.

9. Verfahren nach Anspruch 8, wobei
zumindest eine Referenzebene des Beschichters (16) und/oder des Belichters (18) und/oder des Messsystems (40) und/oder der Vorrichtung (1) ermittelt wird und
eine Referenzebene des Beschichters (16) vorzugsweise eine Beschichtungsebene ist und/oder eine Referenzebene des Belichters (18) vorzugsweise eine mittlere Fokusebene der Belichtungseinheiten (31) ist.

10. Verfahren nach einem der Ansprüche 8 oder 9, wobei eine Ausrichtung des Belichters (18) und/oder ein Ermitteln der mittleren Fokusebene des Belichters (18) anhand von ermittelten Schärfewerten der Abbildung einzelner Belichtungseinheiten (31) in verschiedenen senkrecht zur vertikalen z-Achse liegenden Bildebenen und deren Lage in einer x/y-Ebene erfolgt.

11. Verfahren nach einem der Ansprüche 8 bis 10, wobei der Beschichter (16) und/oder der Belichter (18) anhand von absoluten z-Positionen und/oder Winkellagen um eine x- und/oder y-Richtung der zugeordneten Referenzebene(n) ausgerichtet wird.

12. Verfahren nach einem der Ansprüche 8 bis 11, wobei zuerst eine Grobausrichtung und dann eine Feinausrichtung des Beschichters (16) und/oder des Belichters (18) und/oder des Messsystems (40) durchgeführt wird.

13. Verfahren zur Verwendung eines Messsystems (40) gemäß einem der Ansprüche 1 bis 3 in einer Vorrichtung (1) gemäß einem der Ansprüche 4 bis 7,
wobei das Messsystem (40) in die Vorrichtung (1) eingebaut ist, dass die Kamera (41) eine optisches Bild des Belichters (18) von unten aufnehmen kann und dass der Abstandssensor den vertikalen Abstand in z-Richtung zu einem oberhalb des Sensors befindlichen Element ermitteln kann und
wobei, mithilfe der Leistungsmesseinrichtung (43), ausgefallene Laser (32) oder Belichtungseinheiten (31) ermittelt werden und/oder Leistungsstufen einzelner Belichtungseinheiten (31) ermittelt werden.

14. Verfahren nach einem der Ansprüche 8 bis 13, wobei vor Einsatz des Messsystems (40) ein bestimmungsgemäßer Betriebszustand der Vorrichtung (1) hergestellt wird.

## Claims

1. Measuring system (40) for equipping or retrofitting a device (1) for manufacturing a three-dimensional object (2) by selective layerwise solidification of a building material (15), wherein
the device (1) includes an irradiator (18) for selectively irradiating a layer of the building material (15) applied in a working plane (7) of the device (1) at locations corresponding to a cross-section of the object (2) to be manufactured, for solidifying the irradiated locations,
the irradiator (18) comprises at least two irradiation units (31), preferably laser arrays, and each irradiation unit (31) can be imaged onto a pixel in the working plane (7) and is at least switchable on and off,
said measuring system (40) includes:
- at least one camera (41) for determining and evaluating the radiation (19) emitted by the irradiator (18) and/or the position and/or orientation of the irradiation unit(s) (31) in absolute and/or relative to one another,
- at least one distance sensor (42) for detecting an extension in a direction (z) perpendicular to the working plane (7),
- a power measuring device (43) for determining a radiation power of the irradiator (18) and/or of at least one of the irradiation units (31), and
- a measuring head holder (44),
wherein the measuring system (40) is configured such that the camera (41), the distance sensor (42) and the power measuring device (43) are mounted in a fixed position relative to each other on the measuring head holder (44) and are arranged in the device (1) in such a way that the camera (41) can acquire an optical image of the irradiator (18) from below and such that the distance sensor (42) can determine the vertical distance in the z-direction to an element located above the sensor,
wherein the at least one camera (41) and the at least one distance sensor (42) are preferably integrated in a single measuring device.

2. Measuring system according to claim 1, comprising at least one switch which is designed to avoid a collision of the irradiator (18) and/or a recoater (16) further included in the device (1) with the measuring system (40).

3. Measuring system (40) according to claim 1 or 2, wherein
the camera (41) comprises a CMOS sensor and/or a CCD sensor, and/or
the power measuring device (42) comprises a photodiode and/or a photo resistor, preferably integrated in an Ulbricht sphere.

4. Device (1) for manufacturing a three-dimensional object (2) by selective layerwise solidification of a building material (15), wherein the device (1) comprises:
an irradiator (18) for selectively solidifying a layer of the building material (15) applied in a working plane (7) of the device (1) at locations corresponding to a cross-section of the object (2) to be manufactured, the irradiator (18) comprising at least two irradiation units (31), preferably laser arrays, wherein each irradiation unit (31) can be imaged onto a pixel in the working plane (7) and is at least switchable on and off,
the device (1) being adapted and/or controlled to repeat the steps of applying and selectively solidifying until the object (2) is completed,
and wherein the device (1) further comprises a measuring system (40) according to any one of claims 1 to 3, which is arranged in the device (1) in such a way that the camera (41), the distance sensor (42) and the power measuring device (43) are mounted in a fixed position relative to each other on the measuring head holder (44), that the camera (41) can acquire an optical image of the irradiator (18) from below and that the distance sensor can determine the vertical distance in the z-direction to an element located above the sensor.

5. Device (1) according to claim 4, wherein
the irradiation units (31) are arranged in modules (30), and/or
the modules (30) are arranged in cascades and/or
the irradiation units (31) are formed as laser arrays, wherein the lasers of the laser array are preferably VCSELs or VECSELs.

6. Device (1) according to one of claims 4 or 5, wherein
a holding device is arranged in the device (1) such that it can be moved in the moving direction (F, y) of the irradiator (18) and in a direction (z) perpendicular to the working plane (7), and
wherein the measuring system (40) is arranged on the holding device so as to be movable in a direction (y) perpendicular to these two directions (x, z).

7. Device (1) according to one of claims 4 to 6, wherein the measuring system (40) and/or the holding device is removable from the device (1).

8. Method for using a measuring system (40) according to one of claims 1 to 3 in a device (1) according to one of claims 4 to 7, wherein
the measuring system (40) is arranged in the device (1) in such a way that the camera (41) can acquire an optical image of the irradiator (18) from below and that the distance sensor can determine the vertical distance in the z-direction to an element located above the sensor, and
a recoater (16) of the device and/or the irradiator (18) and/or the measuring system (40) are aligned with each other and/or with respect to a reference plane of the device (1).

9. Method according to claim 8, wherein
at least one reference plane of the recoater (16) and/or of the irradiator (18) and/or of the measuring system (40) and/or of the device (1) is determined, and
a reference plane of the recoater (16) is preferably a recoating plane and/or a reference plane of the irradiator (18) is preferably a mean focal plane of the irradiation units (31).

10. Method according to one of claims 8 or 9, wherein an alignment of the irradiator (18) and/or a determination of the mean focal plane of the irradiator (18) is carried out on the basis of determined sharpness values of the projection of individual irradiation units (31) in different image planes lying perpendicular to the vertical z-axis and of their position in an x/y plane.

11. Method according to one of claims 8 to 10, wherein the recoater (16) and/or the irradiator (18) is aligned on the basis of absolute z positions and/or angular positions about an x and/or y direction of the associated reference plane(s).

12. Method according to one of claims 8 to 11, wherein first a coarse alignment and then a fine alignment of the recoater (16) and/or of the irradiator (18) and/or of the measuring system (40) is carried out.

13. Method for using a measuring system (40) according to one of claims 1 to 3 in a device (1) according to one of claims 4 to 7,
wherein the measuring system (40) is arranged in the device (1) in such a way that the camera (41) can acquire an optical image of the irradiator (18) from below and such that the distance sensor can determine the vertical distance in the z-direction to an element located above the sensor, and
wherein, by means of the power measuring device (43), failed lasers (32) or irradiation units (31) are detected and/or power levels of individual irradiation units (31) are detected.

14. Method according to one of claims 8 to 13, wherein an intended operating state of the device (1) is established before the use of the measuring system (40).

## Revendications

1. Un système de mesure (40) pour équiper ou rééquiper un dispositif (1) pour fabriquer un objet tridimensionnel (2) par solidification sélective couche par couche d'un matériau de construction (15), dans lequel
le dispositif (1) comprend un exposeur (18) pour exposer sélectivement une couche du matériau de construction (15) appliquée dans un plan de travail (7) du dispositif (1) à des positions qui correspondent à une section transversale de l'objet (2) à fabriquer, pour solidifier les positions exposées,
l'exposeur (18) comprend au moins deux unités d'exposition (31), de préférence des réseaux laser, et chaque unité d'exposition (31) peut être imagée sur un pixel dans le plan de travail (7) et peut être au moins allumée et éteinte,
le système de mesure (40) comprend :
- au moins une caméra (41) pour déterminer et évaluer le rayonnement (19) émis par l'exposeur (18) et/ou la position et/ou l'orientation de l'unité ou des unités d'exposition (31) de manière absolue et/ou l'une par rapport à l'autre,
- au moins un capteur de distance (42) pour détecter une extension dans une direction (z) perpendiculaire au plan de travail (7),
- un dispositif de mesure de puissance (43) pour déterminer une puissance de rayonnement de l'exposeur (18) et/ou d'au moins une des unités d'exposition (31), et
- un support de tête de mesure (44),
dans lequel le système de mesure (40) est conçu de telle sorte que la caméra (41), le capteur de distance (42) et le dispositif de mesure de puissance (43) sont montés en relation de position fixe les uns par rapport aux autres sur le support de tête de mesure (44) et sont intégrés dans le dispositif (1) de telle sorte que la caméra (41) peut prendre une image optique de l'exposeur (18) par le bas et que le capteur de distance (42) peut déterminer la distance verticale dans la direction z par rapport à un élément situé au-dessus du capteur,
dans lequel l'au moins une caméra (41) et l'au moins un capteur de distance (42) sont de préférence intégrés dans un seul dispositif de mesure.

2. Système de mesure selon la revendication 1, qui comprend au moins un commutateur qui est conçu pour éviter une collision de l'exposeur (18) et/ou d'un enducteur (16) contenu en outre dans le dispositif (1) avec le système de mesure (40).

3. Système de mesure (40) selon l'une des revendications 1 ou 2, dans lequel
la caméra (41) comprend un capteur CMOS et/ou un capteur CCD et/ou
le dispositif de mesure de puissance (42) comprend une photodiode et/ou une photorésistance, de préférence intégrée dans une sphère d'Ulbricht.

4. Un dispositif (1) pour fabriquer un objet tridimensionnel (2) par solidification sélective couche par couche d'un matériau de construction (15), le dispositif (1) comprenant :
un exposeur (18) pour solidifier sélectivement une couche du matériau de construction (15) appliquée dans un plan de travail (7) du dispositif (1) à des positions qui correspondent à une section transversale de l'objet (2) à fabriquer, dans lequel l'exposeur (18) comprend au moins deux unités d'exposition (31), de préférence des réseaux laser, et chaque unité d'exposition (31) peut être imagée sur un pixel dans le plan de travail (7) et peut être au moins allumée et éteinte,
dans lequel le dispositif (1) est configuré et/ou commandé pour répéter les étapes d'application et de solidification sélective jusqu'à ce que l'objet (2) soit terminé,
et dans lequel le dispositif (1) comprend en outre un système de mesure (40) selon l'une des revendications 1 à 3, qui est intégré dans le dispositif (1) de telle sorte que la caméra (41), le capteur de distance (42) et le dispositif de mesure de puissance (43) sont montés en relation de position fixe les uns par rapport aux autres sur le support de tête de mesure (44), que la caméra (41) peut prendre une image optique de l'exposeur (18) par le bas et que le capteur de distance peut déterminer la distance verticale dans la direction z par rapport à un élément situé au-dessus du capteur.

5. Dispositif (1) selon la revendication 4, dans lequel
les unités d'exposition (31) sont disposées dans des modules (30) et/ou
les modules (30) sont disposés en cascades et/ou
les unités d'exposition (31) sont formées en tant que réseaux laser, dans lequel les lasers du réseau laser sont de préférence VCSEL ou VECSEL.

6. Dispositif (1) selon l'une des revendications 4 ou 5, dans lequel
un dispositif de maintien est disposé dans le dispositif (1) de manière déplaçable dans la direction de déplacement (F, y) de l'exposeur (18) et dans une direction (z) perpendiculaire au plan de travail (7) et
dans lequel le système de mesure (40) est disposé sur le dispositif de maintien de manière déplaçable dans une direction (y) perpendiculaire à ces deux directions (x, ^{z}).

7. Dispositif (1) selon l'une des revendications 4 à 6, dans lequel le système de mesure (40) et/ou le dispositif de maintien peut être retiré du dispositif (1).

8. Procédé d'utilisation d'un système de mesure (40) selon l'une des revendications 1 à 3 dans un dispositif (1) selon l'une des revendications 4 à 7, dans lequel
le système de mesure (40) est intégré dans le dispositif (1) de telle sorte que la caméra (41) peut prendre une image optique de l'exposeur (18) par le bas et que le capteur de distance peut déterminer la distance verticale dans la direction z par rapport à un élément situé au-dessus du capteur et
un enducteur (16) du dispositif et/ou l'exposeur (18) et/ou le système de mesure (40) sont orientés l'un par rapport à l'autre et/ou par rapport à un plan de référence du dispositif (1).

9. Procédé selon la revendication 8, dans lequel
au moins un plan de référence du enducteur (16) et/ou de l'exposeur (18) et/ou du système de mesure (40) et/ou du dispositif (1) est déterminé et
un plan de référence du enducteur (16) est de préférence un plan de revêtement et/ou un plan de référence de l'exposeur (18) est de préférence un plan focal moyen des unités d'exposition (31).

10. Procédé selon l'une des revendications 8 ou 9, dans lequel une orientation de l'exposeur (18) et/ou une détermination du plan focal moyen de l'exposeur (18) sont effectuées à l'aide de valeurs de netteté déterminées de l'image de différentes unités d'exposition (31) dans différents plans d'image situés perpendiculairement à l'axe z vertical et de leur position dans un plan x/y.

11. Procédé selon l'une des revendications 8 à 10, dans lequel le enducteur (16) et/ou l'exposeur (18) sont orientés à l'aide de positions z absolues et/ou de positions angulaires autour d'une direction x et/ou y du ou des plans de référence associés.

12. Procédé selon l'une des revendications 8 à 11, dans lequel une orientation grossière puis une orientation fine du enducteur (16) et/ou de l'exposeur (18) et/ou du système de mesure (40) sont tout d'abord effectuées.

13. Procédé d'utilisation d'un système de mesure (40) selon l'une des revendications 1 à 3 dans un dispositif (1) selon l'une des revendications 4 à 7,
dans lequel le système de mesure (40) est intégré dans le dispositif (1) de telle sorte que la caméra (41) peut prendre une image optique de l'exposeur (18) par le bas et que le capteur de distance peut déterminer la distance verticale dans la direction z par rapport à un élément situé au-dessus du capteur et
dans lequel, à l'aide du dispositif de mesure de puissance (43), des lasers (32) défaillants ou des unités d'exposition (31) sont déterminés et/ou des niveaux de puissance de différentes unités d'exposition (31) sont déterminés.

14. Procédé selon l'une des revendications 8 à 13, dans lequel un état de fonctionnement conforme à la destination du dispositif (1) est établi avant l'utilisation du système de mesure (40).
